# EUROPEAN PATENT SPECIFICATION

(11) **EP 2 898 500 B1**
(45) Date of publication and mention of the grant of the patent: **03.11.2021**
(21) Application number: 13838557.0
(22) Date of filing: 23.09.2013
(51) Int. Cl.: G09G 3/22, G06F 9/30, G09F 19/22

(54) **CONTROL OF FLICKER IN DISPLAY IMAGES USING LIGHT EMITTING ELEMENT ARRAYS AS VIEWED BY A VIEWER IN MOTION**
FLACKERSTEUERUNG IN VON EINEM BETRACHTER IN BEWEGUNG BETRACHTETEN ANZEIGEBILDERN MITHILFE VON ARRAYS AUS LICHTEMITTIERENDEN ELEMENTEN
COMMANDE DU SCINTILLEMENT DANS DES IMAGES AFFICHÉES À L'AIDE DE RÉSEAUX D'ÉLÉMENTS D'ÉMISSION DE LUMIÈRE VUES PAR UN OBSERVATEUR EN MOUVEMENT

(30) Priority: 24.09.2012 US 201261704750 P; 30.07.2013 US 201361859906 P
(43) Date of publication of application: 29.07.2015
(73) Proprietor: Digital Underground Media Inc., Winnipeg, MB R3T 0C3 (CA)
(72) Inventor: HAN, Jong Hwi, Incheon 406-705 (KR); LEE, Yeong Keun, Suwon-si Gyeonggi-do (KR); BICKNELL, Oswald Kenneth, Winnipeg, MB R3T 0C3 (CA)
(74) Representative: Studio Torta S.p.A.
(86) International application number: PCT/CA2013/000796
(87) International publication number: WO 2014/043791

(56) References cited:
- WO-A1-2013/151552
- CN-Y- 2 313 265
- GB-A- 2 332 083
- GB-A- 2 473 495
- US-A1- 2011 035 777
- US-A1- 2013 232 003
- US-B1- 6 169 368
- US-B2- 7 156 519
- None

## Description

### FIELD

The present invention relates to the display of images using an array of light emitting elements as viewed by a viewer in motion.

### BACKGROUND

Conventional display methods exist positioning an advertisement or other informational display on a shop front or in a show window or for an outdoor advertisement. Display examples include a painted or printed signboard as well as using a digital sign board comprising a neon sign or LED. Also used are display system of an improved large TV, liquid crystal TV or LED type such as a Jumbotron.

However, according to each of these conventional display methods, the display is mainly directed towards a standing person, a person moving very slowly by the sign, and therefore, the conventional methods involve a problem in that a person moving at a high speed in the vicinity of a display apparatus cannot see the display content with any detail required in order to completely comprehend and acknowledge the display information contained on the sign. With recent increase of the speed of a vehicle and recent reduction of a space for construction of an advertising tower or the like, the necessity of a display apparatus in which the display content can be correctly seen even from a moving vehicle is increasing.

One advancement in the display of content in the vicinity of quickly moving vehicle has been proposed by Tokimoto in US patent 5,202,675 and by Margetson in US patent 6,169,368 these described systems use a concept of after image in order to help coordinate the display of an image digitally adjacent to a fast moving vehicle.

Document US6169368 discloses a visual display having an array of light sources actuated by controller in given sequence according to stored program for displaying advertisement to viewer moving past it at predetermined speed, e.g. on train.

However, experience has shown that these described systems suffer from image flicker and/or image drift of the displayed image, a consequence of variability in vehicle speed. It is also noted that current research in perception of images by the human visual system has shown that the persistence of image phenomena may not account for our ability to perceive a sequence of frames as a continuous moving picture and may not account for our ability to aggregate a series of flashed images into a composite image. Rather, currently held belief is that the short range apparent motion effect and the beta effect account for and explain the ability of the human visual system to recognize a sequence of frames as a continuous moving picture, as well as to aggregate a series of flashed images into a composite image.

A further disadvantage of the systems of Tokimoto or Margetson is that communication protocols (e.g. TCP/IP) used between a source of display data and the display unit require expensive hardware components to provide fast communication speeds, but can be difficult to synchronize control signals for the various display elements for a plurality of adjacent display devices. A further disadvantage in existing systems is the use of communication protocols (e.g. RS485) that provides for a simplicity of hardware components but with a cost of undesirable transit times for transferring large amounts of data between the data source and display units. This disadvantage becomes accentuated at higher vehicle speeds.

Also, currently the generation of panoramic imagery as a composite of different images displayed at differing vehicle speeds is problematic, in view of panoramic continuity and image flicker problems.

### SUMMARY

It is an object of the present invention to obviate or mitigate at least one of the above-presented disadvantages.

Current imaging systems for displaying images to viewers in motion suffer from image flicker and/or image drift of the displayed image that is a consequence of variability in vehicle speed, as well as problems in generation of panoramic imagery as a composite of different images displayed at differing vehicle speeds in view of panoramic continuity and image flicker problems. These systems also suffer from inadequate data communication problems, as communication protocols used between a source of display data and the display unit require expensive hardware components to provide fast communication speeds, but can be difficult to synchronize control signals for the various display elements for a plurality of adjacent display devices. The present invention is defined in the independent claims and various aspects in the dependent claims,.

### BRIEF DESCRIPTION OF THE DRAWINGS

Exemplary embodiments of the invention will now be described in conjunction with the following drawings, by way of example only, in which:
Figure 1 is a perspective view of a display system having a plurality of display units;
Figure 2a is an alternative embodiment of the system of Figure 1;
Figure 2b is a top view of the system of Figure 2a;
Figure 2c shows a combination of picture elements as a display image of a display unit of Figure 2a;
Figure 2d shows a display image having a number of picture elements displayed by the display unit of Figure 1 and Figure 2a;
Figure 2e is an example picture element of the display image of Figure 2d;
Figure 3 is a network embodiment of the display system of Figure 1;
Figure 4 is an example operation of a system controller of the system of Figure 3;
Figure 5 is an example operation of a display controller of the system of Figure 3;
Figure 6a shows a further alternative embodiment of the system of Figure 1 having multiple display units;
Figure 6b shows multiple display images generated by the system of Figure 6a;
Figure 6c shows an alternative embodiment of the multiple display images generated by the system of Figure 6a;
Figure 7 shows an alternative network embodiment of the system of Figure 1;
Figure 8 is an alternative embodiment of speed sensing of the system of Figure 1;
Figure 9 shows a further embodiment of the system of Figure 1;
Figure 10 shows timing and spatial location sequencing of adjacent display images for panoramic image and/or image flicker considerations for the system of Figure 1;
Figure 11 is an alternative embodiment of Figure 10; and
Figure 12 is an example configuration of devices of the system of Figure 1.
Figure 13 is an additional embodiment of a configuration of devices of the system of Figure 1; and
Figure 14 is an additional embodiment of a configuration of devices of the system of Figure 1.

### Display Information system 10

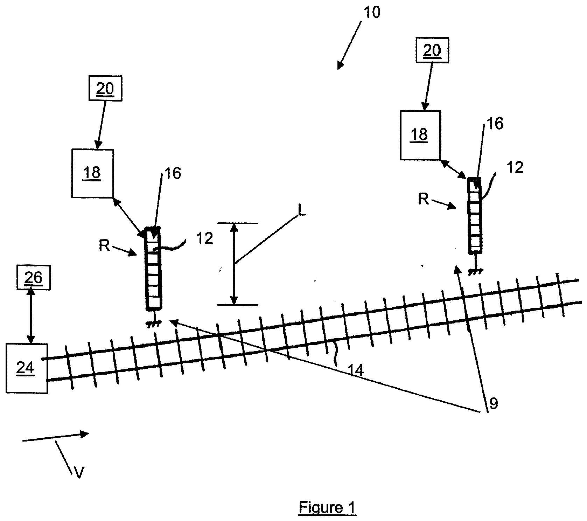

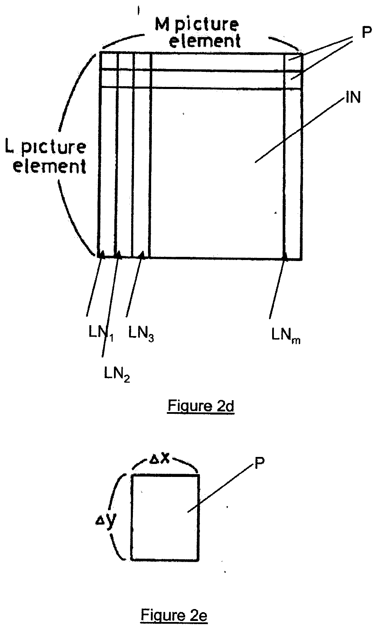

Referring to Figure 1, shown is a display information system 10 including a series 9 of display units 12 located at the side of a vehicle pathway 14 (e.g. roadway, train track, etc.). Each display unit 12 includes a series of light emitting elements 16, such that the elements 16 are individually energized by a respective display controller 18 in response to a predetermined stored display program and representative of a predetermined display image I. For example, each display unit 12 of the series 9 consists of at least one column of height L containing a plurality of rows R arranged vertically in the column L of individually and selectively energizable light elements 16 (for example light emitting diodes (LEDs)). It is recognized that each row R can contain one or more elements 16 to represent a pixel P of a display image I (see Figure 2d), such that a pixel is defined as the smallest, controllable element of a picture represented by the display image I (e.g. the term "pixel" can be used in the abstract, or as a unit of measure, in particular when using pixels as a measure of resolution). For example, each row R can contain one or more light emitting elements 16 that are energized together to provide for each pixel P, in order to account for desired variable intensity of each pixel P for sequential energizes of each of the row elements 16 in the column L of the display unit 12, in order to produce the pixels P of the individual image column components LN₁... LNₘ of the display image I. It is recognized that the collection of pixels P in each of the column components LN₁... L1ₘ make up the composite display picture elements (e.g. single image components) of the display image I. Accordingly, it is recognised that each individual display unit 12 can be referred to uniquely by the system 10 as LN (e.g. L1, L2, L3, etc.), such that N refers to the number of display units in the series 9. For example,L1₁₋ₘ refers to the collection of image column components for specific image display unit L1,L2₁₋ₘ refers to the collection of image column components for specific image display unit L2, etc. The reference "m" refers to the total number of image columns that are aggregated (e.g. built) by the human visual system to build a single display image IN, as compared to a series of display images IN (e.g. I1, I2, I3... as static plane images) displayed in sequence that perceived by the human visual system as an animated film or movie. It is recognised that one explanation for the above-noted functioning of the human visual system is "the short range apparent motion effect" and "the beta effect".

The one or more row elements 16 in each row R can be used to control the intensity of each pixel P as variable, such that for color images I a color of each pixel P can be represented by a plurality (e.g. two, three or four) component intensities such as red, green or red, green, and blue or cyan, magenta, yellow, and black. It is recognized that the colour of each pixel P can be provided by a single row element 16 capable of emitting different colours (e.g. multicolor LEDS) and/or by a collection of different coloured elements 16 (e.g. a grouping of colour dedicated LEDs - one red, one green and one blue ― energized in different combinations to produce the desired colour of the pixel P). It is also recognized that the brightness intensity of each pixel P can be varied by an element 16 capable of emitting different brightness intensities (e.g. according to different energizing voltages as per parameters 22) and/or by a collection of different elements 16 (e.g. a grouping of LEDs energized in different number combinations - one as compared to two or more simultaneously - to produce the desired brightness intensity of the pixel P). In any event, it is recognised that each row R can contain one or more row elements 16 used to form each pixel P of the display image I.

In general operation, the controller 18 causes selected elements 16 in the rows R of the column L of the display unit 12 to be turned ON and OFF, in a predetermined sequence as dictated by a received data packet 20, with a time span of microseconds (e.g. representing 455 pixels along a column that are lit for 0.042 seconds in duration). As further described below, the data packet 20 contains data instructions for each of the row elements 16 in the column L, including parameters 22 such as but not limited to: what time to start to energize/activate, what duration to energize/activate, variability of colour and brightness to display image I, activation frequency and/or frame rate (e.g. 1/24 sec), etc

It is recognized that a number of the parameters 22 are dependent on the variable speed V of the vehicle 24 (e.g. automobile, train, etc.) travelling on the pathway 14, as sensed in real-time by a speed sensors 26 located adjacent to the pathway 14 or otherwise mounted on the vehicle 24 itself. It is recognized that operation of the speed sensors 26 in real time can be defined as multiple vehicle speed V readings are performed or otherwise identified by the speed sensors 26 within the time period for display of the all of the pixels P display image I. For example, a plurality of speeds V are reported in the time period (or time periods) measured between the start of activation of the first element 16 of the display image I in the first individual column image component LN₁ and the start of activation of the last element 16 of the display image I in the last individual column image component LNₘ, or any other time interval there between. It is recognized that the reporting of the speeds V can be on a periodic basis (regular or irregular), as desired, such that each display image I is displayed based on parameters 22 determined using a plurality of different vehicle speeds V, as further described below.

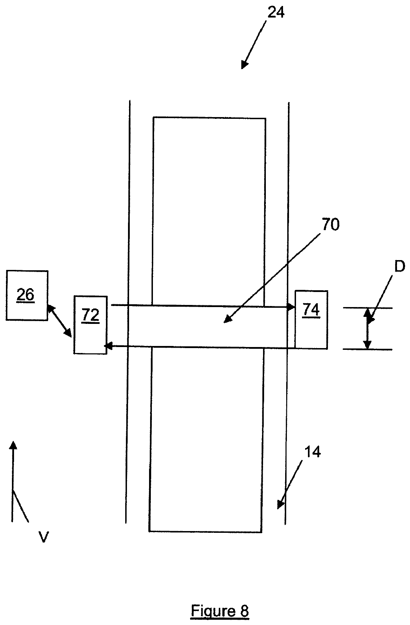

In one embodiment, shown in Figure 8, the speed sensor 26 provides speed sensing of the vehicle 24 speed V by timing the passage of predefined structures 70 of known dimension D of the vehicle 24 (e.g. for automobiles this could be the length between the front and rear axels of the car, for trains this could be the length of the gaps between the individual cars of the train- as shown). In terms of the train, the predefined structure 70 of the gap is a repeated structure, such that each vehicle 24 (e.g. train) has a plurality of these predefined structures 70, thereby facilitating multiple speed V measurements for each train. The predefined structure 70 (e.g. gap) is a known dimension D obtained by utilizing measurements representative of the vehicle 24 (e.g. the prescribed rolling stock of the train). In this embodiment, the speed sensor 26 sends a detector beam (e.g. light such as but not limited to infra red as current standards may not allow a laser beam in the tunnel)) across the pathway 14 (e.g. track)from a light source 72 to a light reflector 74 (or light detector), in order to detect the time of passage of the structure 70 by the speed sensor 26.

Using the example of the gap between train cars, the light source 72 and light reflector/detector 74 would be positioned on opposite sides of the pathway 14, such that the edges of the gap would be detected by presence of the light beam at (or reflected from) the reflector 74. Using the detected time between gap edges and the known dimension D of the gap, the speed of the vehicle 24 can be calculated using appropriate speed equations such as but not limited to speed equals distance divided by time. Therefore, when no vehicle 24 is present, as during the gap between the cars of the train, the light beamcan be reflected back to the sensor causing a positive response, such that the duration of this positive response is then converted into a rate of speed based on the known distance between the cars of train. It is recognised that other light source 72 andreflector/detector 74 arrangements can be used to inform the speed sensor 26 of the duration for passage of the known dimension D of the predefined structure 70 of the vehicle 24, as desired. It is envisioned that the multiple speed V measurements of the vehicle 24 could be accomplished for the train example by measuring the speed V of the train when the subsequent gap (or other predefined structure 70) passes the speed sensor 26 (or array of speed sensors 26 in the case where the system 10 has more than one speed sensor 26). It is recognised that multiple speed V measurements can be determined by detecting the speed for the passage of each predefined structure 70 (e.g. each time the gap is identified) or for a specified subset of the plurality of these predefined structures 70 (e.g. every second gap, the first and middle gap of the train, etc.), as utilized by the display controller 18 and/or system controller 30 to coordinate the display of the image IN for any one display unit 12 or respective display units 12 of the series 9.

In terms of number of speed sensors 26 for the system 10, this could be provided as at least one speed sensor 26 (e.g. including the light source 72 and reflector/detector 74) per series 9 of the display units 12. As one example of the one speed sensor 26, this arrangement could be embodied as positioned on a housing of the display unit itself 12 for one or more of the display units 12 in the series 9. It is also recognised that the speed sensors 26 could be positioned adjacent to one or more of the display units 12, as desired.

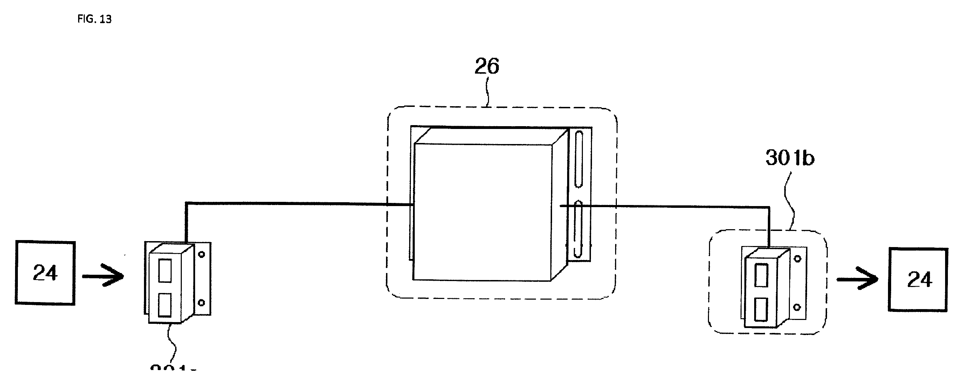

In an additional embodiment, as shown in Figure 13, the system has a plurality of location detection units 301a and 301b for detecting the location of the vehicle (train) 24 travelling on the pathway 14, and the speed sensor 26 may detect the speed of the moving vehicle 24 when the location of the moving vehicle 24 is detected by the location detection units 301a and 301b. In this case, the speed sensor 26 is positioned between the location detection units 301a and 301b to operate in connection with the location detection units 301a and 301b.

Specifically, when any one of the location detection units 301a and 301b positioned in front and rear end sides along the pathway 14 detects the location of the moving vehicle 24, the speed sensor 26 positioned between the front location detection unit 301a and the rear location detection unit 301b performs an operation for detecting the speed of the moving vehicle 24 of which the location is detected, which is intended to prevent speed detection errors from occurring when any one location detection unit 301a or 301b detects the location of the moving vehicle 24. Accordingly, images may be sequentially displayed on the display units 12 in response to the speed of the moving vehicle 24 while the images displayed on the display units 12 may be clearly shown to passengers of the vehicle 24 by accurately detecting the speed of the moving vehicle 24.

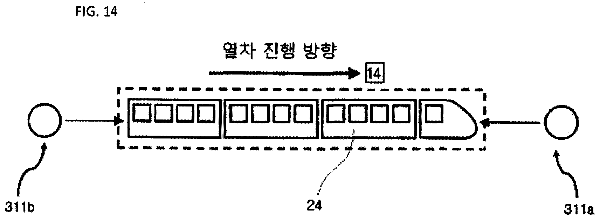

In an additional embodiment, as shown in Figure 14, a plurality of laser beam sensors 311a and 311b for detecting location and speed of the vehicle (train) 24 travelling on the pathway 14 are provided in front and rear portions of the moving vehicle 24. Accordingly, the location and speed of the moving vehicle may be accurately measured while the images may be displayed on the display units 12 in a smooth and natural way.

Specifically, as shown in Figure 14, in a state in which the plurality of laser beam sensors 311a and 311b are disposed on the pathway 14 of the moving vehicle 24, the laser beam sensors 311a and 311b are made to simultaneously measure both location and speed of the moving vehicle 24 while the vehicle 24 is travelling on the pathway 14. Accordingly, images may be sequentially displayed on the display units 12 in response to the location and speed of the moving vehicle 24 while the images displayed on the display units 12 may be clearly shown to passengers of the vehicle 24 by accurately detecting the location and speed of the moving vehicle 24.

As such, the pair of location (or presence) detection units 301a,b with the speed sensor 26 positioned between them can be used to detect vehicle 24 positioning on the pathway 14 as well as to facilitate measurement of vehicle 24 speed and direction, hence velocity. The location sensors 301a,b can be spaced towards the beginning and end of the vehicle 24, however it could also be configured to have the spacing of the location sensors 301a,b to either end of one or more individual cars/portions of the vehicle 24 (e.g. train car). As such, it is recognized that distance between the detection units 301a,b is predefined/known and can be used in determination of speed, direction, and/or presence detection of the vehicle 24.

For example, when any one of the location detection units 301a and 301b detects the location or presence of the vehicle 24, it can be assumed that the vehicle 24 is present and then the speed detector 26 can be used to identify the speed of the vehicle 24. If the other of the detection units 301a or 301b also detects the vehicle 24 presence, then both presence and direction of vehicle 24 travel can be determined/confirmed, which can be used to inhibit speed detection errors from occurring when only any one location detection unit 301a or 301b detects the location. As such, that both of the detection units 301a,b can detect before speed (both speed and direction) is determined. Alternatively, location detection can come first and then the speed determination can come second, as both presence and direction can be identified and confirmed by operation and sensing of the location detection unites 301a,b.

An example operation of the speed detector 26 and the location detection units 301a,b is as follows.

There are multiple of these devices 301a,b and/or speed detector 26 set up along the system path 14, both along viewing locations of the path 14 and/or in non viewing locations of the path 14. The way the components 301a, 301b, 26, and the software resident in speed detection unit 26, in conjunction with the main processor, determine the speed of and direction of a passing train vehicle 24 in the following manner:
- detection unit 301a or 301b detects the presence of the vehicle 24;
- Which also starts a clock/timer of the processor;
- The distance from detection unit 301a to 301b is known and stored in storage for retrieval by the processor;
- when the other of detector unit 301a or 301b then detects the presence of the vehicle 24, the time and distance calculation performed by the processor determines the speed of the vehicle 24;
- depending on which of unit 301a or 301b first detected the presence of the vehicle 24, activation second of the other unit 301b or 301a is subsequently used to determine the direction of the vehicle 24.

As such if unit 301a and not unit 301b detects presence of the vehicle 24, or unit 301b and not unit 301a, detects presence of the vehicle 24, then no speed is determined as the time and distance calc is not completed. To be clear if only one unit 301a,b detects and not the other unit 301a,b, then the location detection reading is discarded as an erroneous reading.

From the detection perspective, location detection by both detection units 301a,b facilitates 1) measurement of speed, 2) presence of vehicle 24 detection, and 3) direction of vehicle 24 travel.

In view of the above example speed sensor 26 embodiments, the parameter 22 of time to start to energize/activate can be affected by variable speed of the vehicle 24, such that changes in the speed of the vehicle 24 would cause either a delay in time to start to energize and/or an advance in time to start to energize of one row element 16 as compared to a different row element 16 in the same individual image column component LN₁₋ₘ (i.e. different vehicle speeds V used for different elements 16 at different vertical positions in the column L) and/or the same row element 16 in adjacent individual image column components L1₁... L1ₘ(i.e. different vehicle speeds V used for different elements 16 at the same horizontal position in different column image components LNₘ). As another example, the parameter 22 of duration to energize/activate can be affected by variable speed of the vehicle 24, such that changes in the speed of the vehicle 24 would cause either a decrease in the duration to energize/activate and/or an increase in the duration to energize/activate of one row element 16 as compared to a different row element 16 in the same individual image column component Ln and/or the same row element 16 in adjacent individual image column components L1₁... L1ₘ.. It is therefore recognized the parameters 22 are used by the display controller 18 to activate each element 16 of the column LNₘ in order to produce each of the pixels P of the display image I as perceived by the passenger of the vehicle 24, taking into account variable vehicle speed V that affects the display parameters for two or more pixels of the display image I. In other words, it is recognized that different pixels P of the same display image I can have parameters 22 based on different vehicle speeds V, as measured by the one or more speed sensors 26.

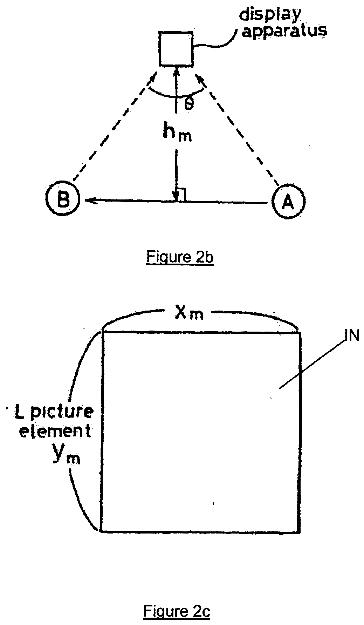

In general, the effect of activation of the row elements 16 of the column LNₘ, according to the received parameters 22, provides for a passenger (of the vehicle 24) gazing at the series 9 of display units 12 as the vehicle 24 passes will perceive a display of a sequence of image I (see Figure 2c) apparently extending over an area substantially greater than the actual limited display area of the column L of elements 16. The effect is achieved because with light flashes of relatively short duration of the elements 16, as controlled by the parameters 22, combined with the motion of the vehicle 24, result in the human visual system processing the display of image I and successive images I as short-range apparent motion. In this manner, the moving viewer perceives each apparent light column L1₁..L1ₘ combined as a frame of image I with dimensions of L × M. The successive images I consisting of light columns L1..LN result in the short range apparent motion of the images 11 to IN. Thus, where a series (i.e. successive multiple activations of each of the elements 16 in series to produce the adjacently perceived image column components L1₁... L1ₘ of the display image 11), all the flashes appear to the eye to have occurred at the same time such that while the viewer has moved relative to the array, the eye perceives a composite light pattern as display image 11, comprising the series of individual image column components L1₁...L1ₘ emitted by the respective column L of the display unit 12. The effect of using the column L of row elements 16 to produce the display image IN of width M can be attributed to the short range apparent motion effect, such that the image IN of the display unit 12 (of the series 9) is perceived as the collection/composite of the individual image column components L1₁...L1ₘthat remain visible at the same time as perceived by the passenger of the vehicle 24 when looking at the display unit 12 as the vehicle 24 moves past the display unit 12 at measured real time variable speed V.

In view of advances in scientific knowledge concerning functioning of the human visual system with respect to displayed images I of short duration, (i.e. less than 0.06 seconds, less 0.055 seconds, less that 0.05 seconds, less that 0,045 seconds, less that 0.043 seconds, less than 0.042 seconds) the concept of after-image has been rebuked in the scientific community over the past 30 years. It is now recognised that the former understanding of persistence of vision concept is now known to be false. There is actually no lingering of image components produced by multiple sequential activationsof the display apparatus, rather the composite image I1..IN is constructed by the human brain as it interprets (e.g. builds or otherwise aggregates) the vertical image columnsLN₁..LNₘ into a picture plane IN, and the sequence of picture planes I1..IN into a moving image is also known as the short range apparent motion effect. In other words, the short range apparent motion effect allows the viewer to perceive smooth motion as opposed to the discrete image frames that are actually displayed. The Beta effect is based on changes between pixels in picture planes 11 to IN, as well as changes between rows R in the adjacent column image components LN₁...LNₘ of each individual image IN. In the absence of any other reference points, visual objects that change location within each successive picture plane are perceived by the mind to move relative to the picture plane based on the information provided by certain neurons in the retina of the human visual system that specialize in detecting motion.

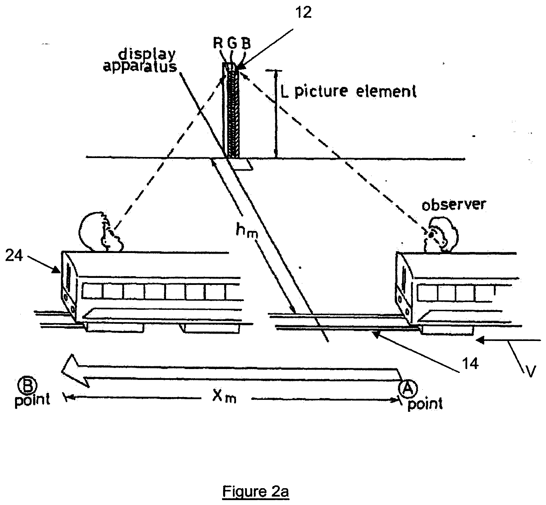

In this manner, the displayed image I contains display content of pixels P by utilizing the actual motion of the passenger travelling at variable real time speed V, such that the display unit 12 can display a display image IN containing a greater number of apparent pixels P than the number of light emitting elements 16 contained in the rows R of the column LN. For example, referring to Figure 2a, a one-dimensional display apparatus consisting of (L×1) picture elements (i.e. pixels P) is vertically arranged, and the moving vehicle 24 moves at a speed of V m/sec at a point apart from the display apparatus 12 by a vertical distance of hm. The value h is determined by the angle of the visual field of the observer and the display area. FIG. 2b is a plane view of FIG. 2a. Supposing that the display time of one image plane is t msec, the observer moves by xm for t msec, as shown by the equation of x=(x0 × t)/1000. At this point, to the observer, it seems that the display apparatus moves relatively by xm FIG. 2c. If new data (activation of the row elements 16 as per the received parameters 22) are displayed at every t/M msec on the one-dimensional display apparatus, i.e. a new set of parameters 22 are fed to each element 16 of the column L for each fraction t/M msec of t msec, a display image IN of (LxM) picture elements (e.g. pixels P) can be obtained FIG. 2d. Supposing that the size of the picture element is of delta y by delta x as shown in FIG. 2e, delta y is determined by the activation time interval between the display elements 16 of the one-dimensional display apparatus 12 for each of the image column components LN, and delta x is determined by the moving speed V of the observer and a changeover speed of each row element 16, such that delta x represents one of the image column components LN (e.g. representing successive activation of the same row element 16 according to a new set of parameters 22). It is recognized that the successive activations of the same row element 16 can be implemented by the display controller (via the parameters 22) using the same speed for each of the activations of the successive activations or different speeds for each of the activations of the successive activations, as further discussed below.

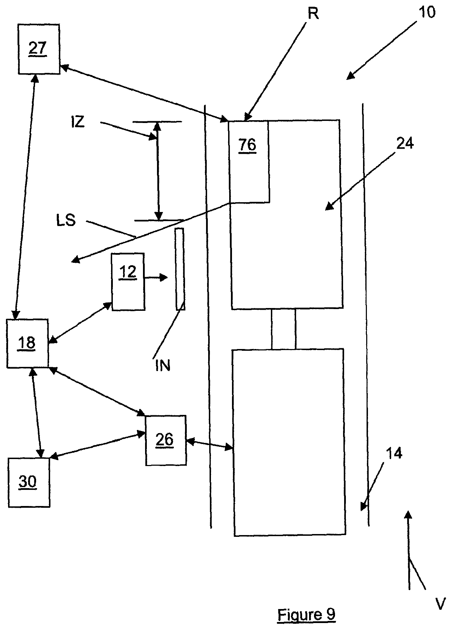

Referring to Figure 9, shown is a further embodiment of the system 10 having the vehicle 24 traveling along pathway 14 with one or more inhibited display zones IZ, such as those portions of the vehicle 24 (e.g. train) in which train personnel 76 (e.g. driver) are located. The system 10 is configured to identify the inhibit zones IZ such that the display unit(s) 12 is/are not activated (i.e. their respective row elements 16 are energized to produce image IN) when the inhibit zone(s) IZ is/are within line of sight LS of the display unit(s) 12. A location sensor 27 is used by the system 10 to informthe controller 18 (and/or controller 30) to cause selected elements 16 in the rows R of the column L (see Figure 1) of the display unit 12 to be turned OFF and/or to remain OFF while the inhibited zone IZ remains within the line of sight LS of any images IN that could be produced by operation of the display unit(s) 12.The function of delayed timing (e.g. inhibited operation) of the display unit 12 operationprovides for keeping any activated display to remainnot visible to train operators 76 (i.e. those individuals located in the inhibited zone IZ), and is implemented as a safety enhancement. The timing of inhibited operation of the display unit(s) 12 within line of sight LS of the inhibited zone IZ can befacilitated by delaying (or otherwise restricting) the firing of the display units 12 for a period of time sufficient to allow the drivers compartment of the train car (e.g. first) to pass the display units 12 but prior to the first passenger window passing the display units 12, as one example of the inhibited zone IZ. This can bedone by using the speed V of the vehicle 24 by the controller 18 (and/or controller 30) as identified by the speed sensor 26, detecting a reference location R of the vehicle 24 by the location sensor 27 (e.g. the front of the train), and setting a clock to delay/restrict the firing of the display units 12 by a time period sufficient for the vehicle 24 to travel a prescribed zone distance (representing a effective line of sight length of the inhibited zone IZ with respect to the location of the display unit(s) 12) past each of the display units 12 within line of sight of the inhibited zone IZ. The prescribed zone distance can be based on known measurements and locations of any identifiedinhibited zone(s) IZ from the prescribed rolling stock of the trains using the pathway 14.

In terms of the series 9 of display units 12, it is recognised that some of the display units 12 would have their display operation restricted (or delayed), for those currently in the line of sight LS of the inhibited zone IZ, while other display units 12 of the series 9 would have their display operation allowed for those currently out of the line of sight LS of the inhibited zone IZ. It is recognised that there could be one or more inhibited zones IZ for any one vehicle 24 (e.g. a train having more than one driver locations 76), at locations 76 at the beginning, at the end and/or in the middle of the vehicle 24.

In the meantime, flicker control of the display images according to embodiments of the present invention is as follows. When image information of an urgent message is to be updated in the system controller 30 in a state in which promotion or advertisement images are being displayed on the display units 12 using the after-image effect, the system controller 30 transmits the image information corresponding to the urgent message to the display controller 18, and the display controller 18 makes the promotion of advertisement images being displayed on the display units 12 stopped and then preferentially displays the image information corresponding to the updated urgent message on the display units 12. An effect of providing passengers of the moving vehicle with public information (e.g., fire alarm, danger alarm, train delay, yellow-dust warning, and so forth) can thus be expected.

### Display of Display Image I based on Variable Speed V

As discussed above, it is recognized that an advantage of the display information system 10 is to inhibit display image I flicker and/or drift due to variability in the speed V of the vehicle 24, by varying the parameters 22 (based on changes in the real time speed V) for each individual row element 16 in the column L (e.g. elements 16 in different rows R of the column L for a particular individual image column component LNₘ would each have parameters 22 based on different speeds V) and/or by varying the parameters 22 for a particular row element 16 in the column L in successive energizes (e.g. elements 16 in the same row R of the column L for successive image column components LN₁...LNₘ would have different parameters 22 based on different speeds V). In this manner, it is recognized that real time speed V of the vehicle 24, as sensed by the speed sensor 26, would be used by a system controller 30 to compute the parameters 22 for the elements 16, such that the speed V used to calculate the parameters 22 would be different for each of two or more row elements 16 in the same image column component LN₁₋ₘ of the display image IN and/or would be different for at least one same row element 16 in adjacent image column components LN₁...LNₘ of the display image IN. In this manner, it is recognized that at least two of the pixels P of the display image IN would have parameters 22 based on different speeds V, as measured and reported in real time by the speed sensor 26.

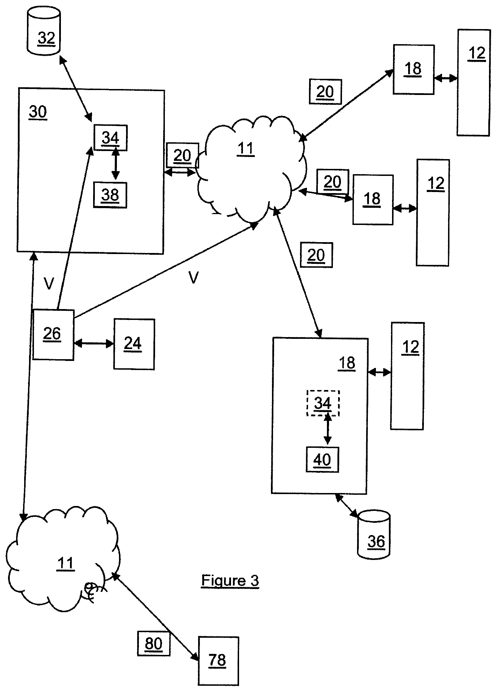

Referring to Figure 3, the display information system 10 can include a system controller 30 situated remote from the display units 12 and connected to the display units 12 via a communication network 11 and further connected to a larger centralized network 78 that allows for real-time loading of image content (i.e. colour and/or brightness data for each of the row elements 16 that cooperate to make the composite image IN during successive activations, as dictated by the parameters 22 that are dependent upon vehicle speed V) which could be further controlled by feedback data 80 regarding demographic of other such information regarding the population contents (e.g. school age people, business people, etc.) of the vehicle 24. One example configuration is for train tunnels where the larger centralized network controller 78 would be situated remotely from the train tunnel system anywhere globally and is connected via the Internet 11 to the system controller 30,which would be situated near the train platform or station and the display units 12 would be mounted remotely from the station on walls of the train tunnels. Further, the connection of the system 10 via Internet/vpn/cloud either wired or wirelessly to the network controller 78 at the remote site could provide for the centralized loading, unloading, and scheduling of the stored images (represented by the parameters 22) in the system 10. In a preferred embodiment, the ability to stream display image content in real or near real-time from the network controller 78 to the system 10 could have transmitted content 80 based on the demographics of the next approaching train/vehicle 24.

It is recognized that the communication network 11 can be referred to a collection of the system controller 30 and display units 12 interconnected by communication channels that allow sharing of resources and information, e.g. the data packets 20, as information exchange (e.g. one way communication, two way communication, etc.). For example, a display coordination process executing in the system controller 30 is able to send/receive data to/from at least one or more display process(s) residing in the display controllers 18 of the remote display units 12, thereby providing for the collection of controllers in the network 11. It is also considered that the network 11 can be implemented as wired, wireless, or combination wired and wireless, network system. Example of wired implementation of the network 11 can include twisted pair wire (e.g. unshielded twisted pair (UTP), shielded twisted pair (STP), etc.). Examples of communication protocols of the data packets 20 over the network 11 can include protocols such as but not limited to: Ethernet, TCP/IP, serial peripheral interface (SPI), etc. Other communication protocols can include RS485. It is also recognized that the communication of the data packets 20 can be as synchronous and/or asynchronous communications.

Referring again to Figure 3, the system controller 30 can have a physical memory 32 for storing the parameters 22 that are used by the display controller 18 to generate the individual pixels P of the display image I. In the case of variable speed V, a parameter generation module 34 can be used by the system controller 30 to take into account modifications to the parameters 22 to account for changes/variability in the speed V of the vehicle 24, as reported in real time by the speed sensor 26. It is recognized that the parameter generation module 34 can be implemented in different modes in order to generate the parameters 22 based on the real time speed. One example mode is where the speed dependent parameter(s) 22 are stored in the memory 32 based on a representative speed and the parameter generation module 34 modifies the value(s) of the speed dependent parameter(s) 22 to account for any differences between the real time speed V and the representative speed. Another example mode is where speed independent variable(s) such as Image content data, system status for the parameter(s) 22 are stored in the memory 32 and the parameter generation module 34 combines the stored variable(s) with the reported real time speed V in order to generate the speed dependent parameter(s) 22. It is recognized that speed independent parameter(s) 22 can be generated and stored in the memory 32, thereby providing for computational efficiency in providing of the parameters 22 (both speed dependent and speed independent) to effect the display of the elements 16 of the display unit 12. In an alternative embodiment, the parameter generation module 34 can be implemented by the display controller 18, such that the variable(s) and/or parameter(s) 22 can accessed in local physical memory 36. In this case, the display controller 18 would receive the real time speed V from the system controller 30 and/or directly from the speed sensor 26, for use by the parameter generation module 34 in generation of the speed dependent parameters 22.

Referring again to Figure 3, the system controller 30 can have a communication module 38 for communicating the data packet 20 over the network 11 for receipt by a communication module 40 of the display controller 18. It is recognized that the communication modules 38,40 can use a shared communication protocol (e.g. SPI) for communicating the data packets 20 between them (e.g. synchronously or asynchronously) over the network 11. Further, as discussed above, the data packets 20 can contain the generated parameters 22 and/or the real time speed V as desired.

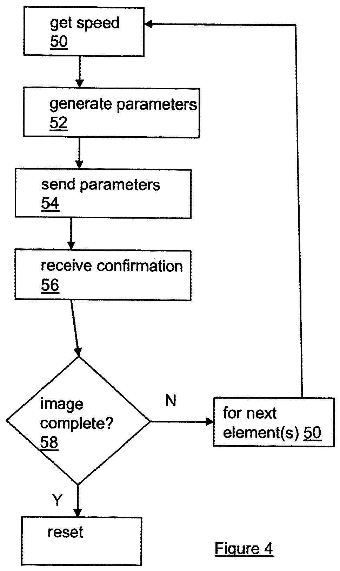

Referring to Figure 4, operation of the parameter generation module 34 for the parameters 22 can be as follows. At step 50, the parameter generation module 34 determines the real time speed V (e.g. as reported by the speed sensor 26) and at step 52 generates one or more parameters 22 to account for the real time speed V for a specified number of elements 16 (e.g. one or more). For example, the specified number of elements 16 can be for all row elements 16 in a particular (e.g. same) column image component Ln or can be for a subset (one or more) of the row elements 16 in a particular (e.g. same) column image component LNₘ. In an extreme example, each of the row elements 16 in the column L would have parameters 22 calculated based on a different real time speed V. In other words, the parameter generation module 34 would check the real time speed V before generating the respective speed dependent parameter(s) 22 for each of the row elements 16 (in this case the specified number of row elements 16 is one) in the same column image component LNₘ.

It is also recognized that the real time speed V can be determined (e.g. as reported by the speed sensor 26) by the parameter generation module 34 between individual column image components LNₘ. In other words, the same real time speed V can be used to determine the parameters 22 for the specified number of elements 16 as all row elements 16 in a particular (e.g. same) column image component L1₁ and then the real time speed is checked and a different real time speed (different than that used in calculating the parameters 22 for the column image component L1₁) is used to determine the parameters 22 for the specified number of elements 16 as all row elements 16 in an adjacent (e.g. same) column image component L1₂. In other words, the real time speed V used to determine the parameters 22 for an individual column image component L1₁ is different than the real time speed V used to determine the parameters 22 for an individual column image component L1₂, such that individual column image component L1₁ and individual column image component L1₂ comprise portions of the total number of pixels P of the display image I1. For example, individual column image component L1₁ could be adjacent to individual column image component L1₂. In an extreme example, the row elements 16 in a particular column image component LNₘ would have parameters 22 calculated based on the same real time speed V, which would be different from the real time speed V used to determine the parameters 22 of the row elements 16 in another one of the column image components LNₘ. In other words, the parameter generation module 34 would check the real time speed V before generating the respective speed dependent parameter(s) 22 for the row elements 16 in different column image components LNₘ.

Further to the above, it is recognized that each of the different column image components LNₘ could have row elements 16 displayed based on different real time speeds V, i.e. V1,V2...Vn corresponding to column image components L1ₘ, L1₂...LNₘ, such that there could also be variations in the real time speed V used for some or all of the row elements in the same column image components LNₘ. In the extreme example, parameter generation module 34 could check the real time speed V before generating the parameters 22 for each of the row elements 16 for each of the pixels P of the display image P, e.g. 256 rows R of column L and 128 individual column image components LNₘ could provide 32768 (or R × Ln number) checks and potentially different real time speeds V used in the generation of the parameters 22 for all elements 16 used in display of the 32768 pixel display image I (assuming one element activated per row R).

It is recognized that the parameter(s) 22 for different specified numbers of row elements 16 can be performed sequentially, i.e. the parameters 22 for one or more row elements 16 is generated based on an identified vehicle speed V and then subsequent parameter(s) 22 for the next group (i.e. one or more) row elements 16 is generated based on a different vehicle speed V.

At step 54 the generated parameters 22 for the specified number of elements 16 is transmitted (e.g. between controllers 18,30 or between controller 18 and display unit 12) for use in activation of the corresponding element(s) 16 in the column L of the display unit 12 for use in generating at least a portion of an individual column image component LNₘ. In view of the above, in the extreme case, the real time speed V would be checked at step 50 and the corresponding parameter (s) 22 generated at step 52 before transmission of the parameters 22 to the display unit 12 for use in activating the element(s) 16 in each row R of the column L for each of the column image components LNₘ. As per the above, one advantage is that the parameter(s) 22 (once generated for an identified vehicle speed V) can be transmitted for consumption by the display unit 12 while the next set of parameter(s) 22 is being generated based on the next identified vehicle speed V, thus providing for sequential transmission of parameter(s) 22 for consumption by the display unit 12 in coordinating activation of the respective row elements 16. One example communication protocol is SPI (as further described below) for the sequential generation, transmission and use of parameter(s) for different specified numbers of row elements 16 (in the same and/or different column image components LNm).

Optionally, at step 56, the communication module 38 receives confirmation data that is representative of the data packet 20 being received and processed (resulting in display of the elements 16 affected by the contents of the data packet 20). At step 58, if the display image I for the respective display unit 12 is complete (i.e. all pixels P of the display image IN have been activated for passage of the vehicle 24), then operation of the display unit 12 is reset until passage of the next vehicle is identified and the process steps 50-58 repeat. Otherwise, if there remains pixels to be activated for the display image IN due to continued passage of the vehicle 24 past the display unit 12, then the process repeats for the remaining row elements 16 and/or column image components LNₘ until passage of the vehicle 24 is complete. One example of the passage of the vehicle 24 being complete is where the sensor 26 no longer detects passage of the vehicle 24 and thereby informs the controller(s) 18,30 of absence of the vehicle 24. Also, it is recognized that operation of the display units 12 can be coordinated by the controllers 18,30 to take into account the delayed/restricted operation of the display unit(s) 12 when determined to be in line of sight LS of the predefined locations 76 (i.e. the inhibited zones IZ).

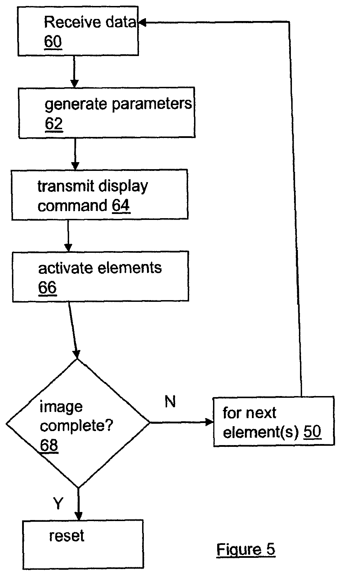

Referring to Figure 5, shown is an example operation of the display controller 18 in communication with the display unit 12. At step 60, the communication module 40 receives the data packet 20 (e.g. containing generated parameters 22 and/or the real time speed V). Optionally at step 62, the parameter generation module 34 uses the received real time speed V to determine speed dependent parameters 22. At step 64, display commands based on the generated parameters 22 for the specified number of elements 16 is transmitted to the display unit 12 for use in activation of the corresponding element(s) 16 in the column L of the display unit 12 for use in generating at least a portion of an individual column image component LNₘ. At step 66, the display controller 18 activates the respective elements 16 according to the received parameters 22 and optionally the communication module 40 sends confirmation data representative of the data packet 20 being received and processed (resulting in display of the elements 16 affected by the contents of the data packet 20). At step 68, if the display image IN for the respective display unit 12 is complete (i.e. all pixels P of the display image IN have been activated for passage of the vehicle 24), then operation of the display unit 12 is reset until passage of the next vehicle is identified and the process steps 50-58 repeat. Otherwise, if there remains pixels to be activated for the display image IN due to continued passage of the vehicle 24 past the display unit 12, then the process repeats for the remaining row elements 16 and/or column image components LNₘ until passage of the vehicle 24 is complete.

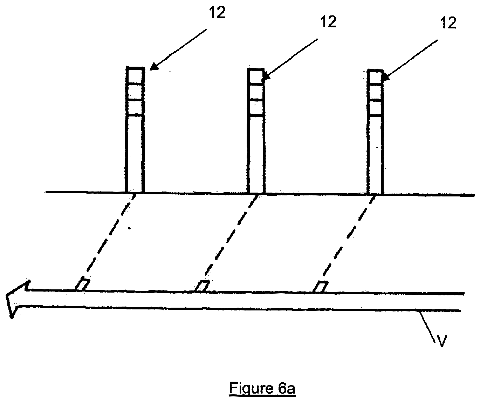

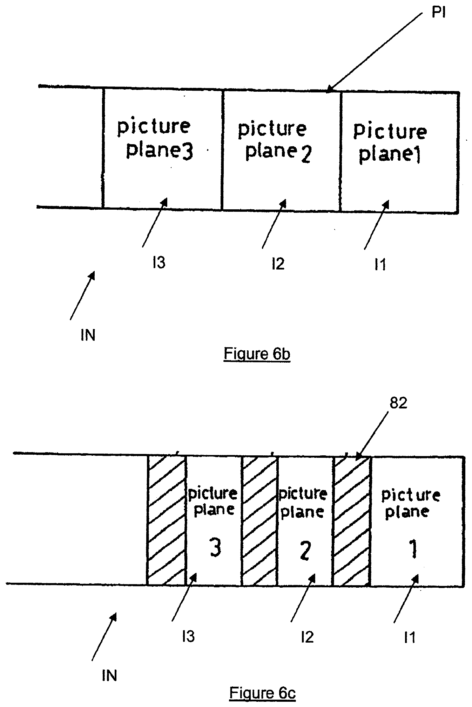

Referring to Figures 6a,b,c shown is an example of multiple display units 12 being used to display the display image IN as the vehicle 24 passes by each of the display units 12 in succession at variable speed V, such that a continuous image display IN for an extended period of time is obtained by using a plurality of one-dimensional display apparatuses. The one-dimensional display units 12 are arranged in the direction of the advance of vehicle 24. In the case where the vehicle 24 moves from the right to the left in the drawings as shown, if the space between two adjacent one-dimensional display units 12 is appropriately set, a continuous long display of picture planes (or frames) 1, 2, 3, N as shown in 6b or a discontinuous frame-to-frame display as shown in FIG. 6c can be obtained. It is recognised that the picture planes 1,2,3,N can be the same or different display images. For example, when the speed of the moving member is 22 m/sec and the display time is 42msec, a continuous display image I (as perceived by the passenger) can be obtained if the display units 12 are arranged at intervals of about 920mm. Of course, when a discontinuous frame-to-frame display as shown in FIG. 6c is obtained, it is not necessary to arrange the display units 12 as adjacently to one another as mentioned above. In view of the above discussion on accounting for variable speed V of the vehicle, the above described process for determining and using the variable speed V can be performed, such that the speed V used to calculate the parameters 22 for elements 16 of the pixels for one of the plane images can be different from the speed V used to calculate the parameters 22 for elements 16 of the pixels for another one of the plane images thus inhibiting flicker as perceived by the moving viewer.

In view of the above, it is recognized that an advantage of the present display information system 10 is to inhibit drift and/or flicker perceived by the passenger for pixels within the same image column component LNₘ of the same display image I, between pixels within different image column components LN₁₋ₘ of same display image I, and/or between pixels within different display images I and/or between different frames of the sequence of images IN. This reduction in image drift and/or flicker is provided based on using a variable speed V quantity to calculate the parameters 22 for different elements 16 as provided above in example embodiments, such speed V as measured and reported in real time by the speed sensor 26.

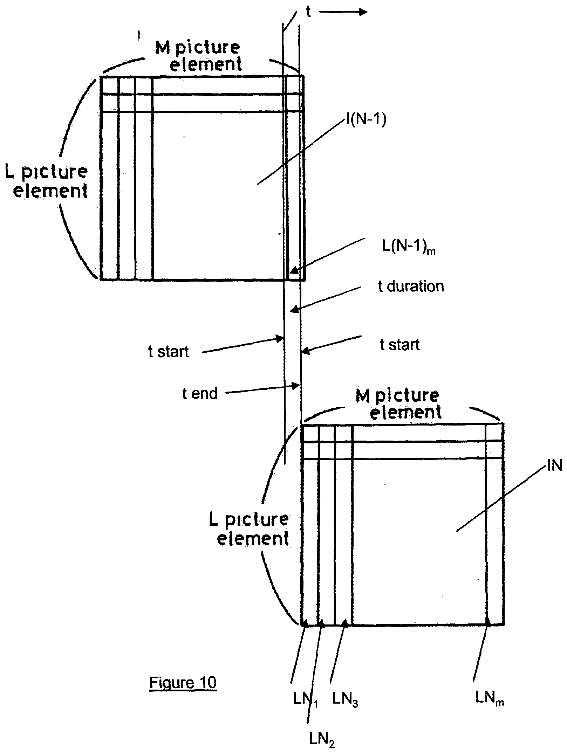

The parameters 22 can also be used to control the degree spacing 82, or lack thereof, as perceived by the vehicle passenger - see Figure 6c, between the display image frames IN. It is recognised the presence of spacing 82 would impact the ability of the system 10 to create a panoramic imagePI (see Figure 6b) experience of the vehicle passenger, the panoramic image PI experience being the perception of one continuous image PI over multiple picture planes IN when viewed from the vehicle 24. This panoramic image PI experience can be accomplished by timing the start of each display image IN (e.g. 12) as synchronized by the system controller 30 in communication with the respective display controller(s) 18 with the end of display of the previous display image IN (e.g. 11) of the series 9, i.e. activation start time (e.g. start time parameter 22) of the row elements 16 in the first image column LN₁ of the subsequent display image IN is synchronized to begin a predefined start time period correlated with the activation start time (e.g. start time parameter 22) of the row elements 16 in the last image column LNₘ of the previous display image I(N-1) ― see Figure 10. In an alternative embodiment, the activation start time of the row elements 16 in the first image column LN₁ of the subsequent display image IN is configured to begin a predefined delay time period (as measured from the activation start time of the last image column LNₘ of the previous display image I(N-1))correlated with the activation duration (e.g. duration parameter 22) of the row elements 16 in the last image column LNₘ of the previous display image I(N-1) ends. It is recognised that the start/delay times can be adjusted based on changes in vehicle speed V between display of adjacent image columns in different display images IN. This spacing 82 control can be used in generation of panoramic imagery PI as discussed.

One example of this predefined start time period is equal to (or slightly greater than) the activation duration of the row elements 16 in the last image column LNₘ of the previous display image I(N-1).One example of this predefined delay time period is equal to (or slightly greater than) the activation start time plus the activation duration of the row elements 16 in the last image column LNₘ of the previous display image I(N-1). In terms of continuous panoramic display (see Figure 6b) comprising a composite image of a plurality of adjacent display images IN (e.g. each of the plurality of display images IN coming from a different display unit 12 of the series 9),each of the display images IN would be a portion of a composite image presented as the panoramic image PI display. In other words, the system controller 30 coordinates via the parameters 22 the start and end times of the individual display images IN to create a segmented panorama image PI , also called stitched panoramas, which is made by joining multiple adjacent display images IN without overlapping the fields of view (as presented by the individual display images IN) to create the panoramic display image PI .

It is recognised that pixel brightness could be coordinated between adjacent pixels in different display images IN, in order to reinforce the perception of panoramic imagery PI by the human visual system of the vehicle passenger. One example of this is where the relative pixel brightness of adjacent pixels in different display images IN is the same or otherwise within a brightness difference tolerance that is not perceivable as different by the vehicle passenger. A further example of this is where the pixel brightness of adjacent pixels in different display images IN is reduced to a brightness level that is not perceivable as light by the vehicle passenger, one example being non-activation of the corresponding row elements 16 to result in the perceived blank or dark image columns LNₘ for one or more of the end image columns LNₘ of the previous display image I(N-1) and one or more of the beginning image columns LNₘ of the subsequent display image IN.

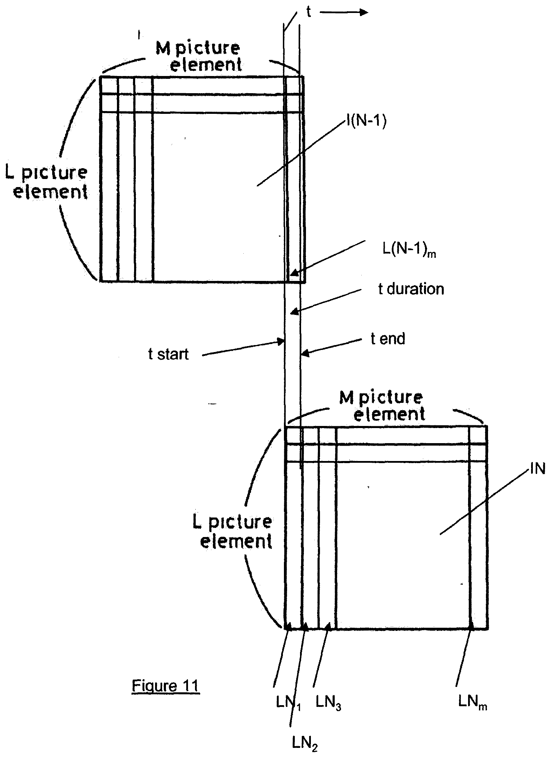

Alternatively, the system controller 30 can coordinate via the parameters 22 the start and end times of the individual display images IN to create a segmented panorama image PI ,e.g. the panoramic image experience, by using display image stitching software to combine multiple images IN having overlapping the fields of view. This can be facilitated by having one or more of the beginning image columns LNₘ(e.g. LN₁, LN₁₋₃, etc.) of the subsequent display image IN have the same or similar display content (e.g. same display colours and duration for each pixel of the beginning image column(s) LNₘ) as one or more corresponding ending image columns LNₘ (e.g. LNₘ, LN_{m-1 to m-3}, etc.) of the previous display image I(N-1).In other words, the perceived spatial location in the composite display image of the ending image columns LNₘ of the previous display image I(N-1) and the perceived spatial location in the composite display image (e.g. panoramic image PI) of the beginning image columns LNₘ of the subsequent display image IN are concurrent or the same (e.g. they are perceived as overlapping), as shown in Figure 11 with one overlapping image column as an example.

It is recognised that in the case of overlapping fields of view, pixel brightness levels could be coordinated between adjacent pixels in different display images IN, in order to reinforce the perception of panoramic imagery PI by the human visual system of the vehicle passenger. One example of this is where the pixel brightness of row elements 16 in the overlapping ending image columns LNₘ of the previous display image I(N-1) is lower than row elements in non-overlapping image columns of the previous display image I(N-1), combined with the pixel brightness of row elements 16 in the overlapping beginning image columns LNₘ of the subsequent display image IN is lower than row elements in non-overlapping image columns of the subsequent display image IN. This relative lower level of brightness of the affected row elements 16 in overlapping image columns can be configured via the parameters 22 to be such that the combined pixel brightness of two overlapping pixels P (as perceived by the vehicle passenger) can be the same or similar to the pixel P brightness of non-overlapping pixels P in each of the display images IN and I(N-1). For example, the brightness level of the row elements 16 in image column LNₘ of display image I(N-1) would be correlated with the brightness level of the row elements 16 in image column LN₁ of display image IN, such that when the combined brightness level of the overlapping image columns is added/combined by the human visual system of the passenger, the perceived brightness level of overlapping pixels is the same or similar as the brightness level of adjacent non-overlapping pixels.

Panoramic imagery PI can be coordinated through the controller(s) 18,30 by aligning the picture planes IN adjacent to one another, such that no spacing 82 between the picture planes IN can be perceived by the vehicle passenger when viewing the display images IN. In this manner, the system 10 via the coordinated display units 12 can display scenery to the train passengers as if they are outdoors rather than in a train tunnel. This is different than what is typically displayed by prior art display systems, as currently the stored image is the next frame in an animated finite movie and is separated by a dark bar created by a gap in the image alignment or a border of no image in the initial and final vertical lines or multiple initial and multiple final vertical lines of the picture elements. It is recognised that the above described configuration of the controller(s) 18,30 to address panoramic image PI display (using the discussed synchronized start and duration timing parameters 22) could also be used to inhibit image flicker issues.

Another embodiment to help control image flicker, as perceived by the vehicle passenger, is the utilization of the black/blank spaces 82 created by no image being transmitted for one or more initial and final vertical rows (i.e. image columns LNₘ)in each adjacent picture plane (e.g. display images IN and I(N-1)), narrow enough to not be perceived by the vehicle passenger but great enough to separate the picture planes so that the human visual system is not processing an overlapping of the last image column(s) LNₘ of display image I(N-1) from one or more initial vertical lines (i.e. image columns LNₘ) of the subsequent display image IN. This helps to inhibit a doubling (or otherwise additive) of the stimulus to the human eye, which can be perceived by the human visual system as a bright flashing and interpreted as flicker. This use of providing blank image columns LNₘ help to reduce flicker without micro speed adjustments, as the black/blank spaces can be set to be wide enough that at the max V within the speed profile of the vehicle 24, the images do not overlap but are not so wide that at the lowest speed V within the speed profile of the vehicle 24 that the blank/black image columns LNₘ are actually perceived by the viewer.

### Alternative SPI Embodiment for Display Information system 10

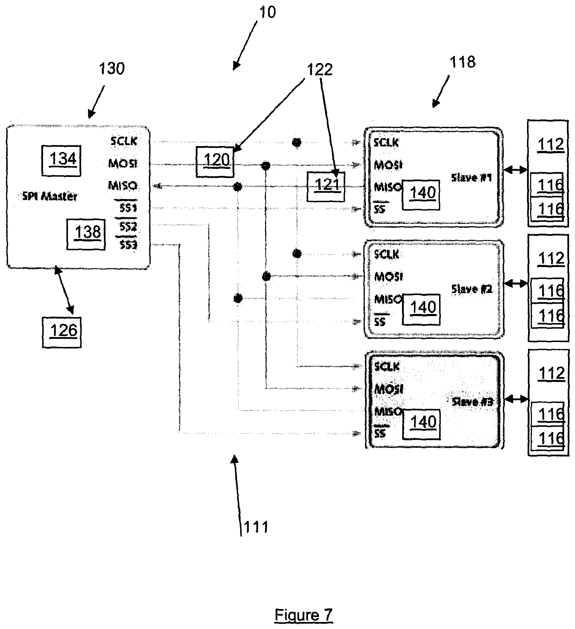

Referring to Figure 7, shown is an alternative configuration of the system controller and the display controllers, such the system controller is configured as a master controller 130 and the display controllers as slave controllers 118 in a serial peripheral interface (SPI) master slave configuration adapted from traditional "in-the-box" computer processor communication protocols. The adaptation of configuring the system controller as the master controller 130 and the display controllers as slave controllers 118, using an SPI communication protocol over the network 111, provides for desired synchronization of multiple display unit 112 operation with a desirable transit time of data packets 120 as a data stream between remote devices connected over a communications network 111 with a simplicity of hardware components.

It is recognized that the communication network 111 can be referred to a collection of the system controller 130 and display units 112 interconnected by communication channels that allow sharing of resources and information, e.g. the data packets 120, as information exchange (e.g. two way communication). For example, a display coordination process executing in the system controller 130 is able to send/receive data to/from at least one or more display process(s) residing in the display controllers 118 of the remote display units 112, thereby providing for the collection of controllers in the network 111. It is also considered that the network 111 can be implemented as wired, wireless, or combination wired and wireless, network system. Example of wired implementation of the network 111 can include twisted pair wire (e.g. unshielded twisted pair (UTP), shielded twisted pair (STP), etc.).

As such, the SPI example provides for one example implementation of transmission of the data packets 120 sequentially as the parameters 122 are generated and transmitted for different vehicle speeds V, as measured in real time by speed sensor 126. Further, once the display controller 118 receives and processes the parameters 122 (i.e. activates the respective elements 116 on the display unit 112 pertaining to the received parameters 122), the display controller 118 listens for additional data packets 120 needed to complete the display image I.

Accordingly, adaptation of SPI for the display system 10 provides for a synchronous communication protocol of the parameters 122 over the network 111. Clock signals SCLK are provided by the master controller 130 to each of the slave controllers 118 to provide display synchronization between the plurality of display units 112. The clock signal SCLK controls when data of the data packets 120 can change and when the data is valid for reading. Therefore, since implementation of SPI communication between the remote controllers 118,130 is synchronous, it has the clock pulse SCLK transmitted along with the data (i.e. data packet 120). It is recognised that other protocols, such as RS-232 and other asynchronous protocols, do not use a clock pulse and therefore data transmission must be timed very accurately, which makes use of these other protocols problematic in the display system 10. Therefore one advantage is that since SPI has the clock signal SCLK, the clock can vary without disrupting the data transmission of the parameters 122, such that the data transmission rate will simply change along with any changes in the respective clock rate sent to the different display units 112 via the display controllers 118.

A desired consequence of using the SPI communication protocol for the system 10 is that in SPI, data initiation typically changes during the rising or falling edge of clock signal SCLK, as this is how the activation of the data packets 120 to start activation of the respective display unit 112 for display of the subsequent respective display image I in the sequence of display images I of the respective adjacent display units 112 is synchronized by the respective clock signals SCLK for each of the display units 112. For example, logically, the point at which data is read by the respective controller is opposite from when it changes, such that the data is valid at the point of reading.

It is recognised that SPI gains efficiency for remote controller 118,130 communication that takes advantage of SPI duplex capability, which consists of simultaneously sending data packets in and out of registers R associated with each of the elements 16 of the column L of the display unit 112. SPI is a serial data communication protocol, representing serial sequential communication of parameters 122, in sequence, for successive adjacent elements 116 (e.g. for successive elements 116 along the column L vertically as well as for elements between the end of a series of elements 116 representing one of the individual image column components L1₁ to a beginning of a series of elements 116 representing the next one of the individual image column components L2₁ of the plurality of image column components LNₘ of the display image I1 see Figure 2d).

The controllers 130, 118 each have a respective SPI communication interface 138, 140, which are configured to communicate over the network 111 as a synchronous serial data link for the data packets 120 that operates in full duplex (e.g. signals on the network 111 carrying data packets 120 go in both directions simultaneously). The remote network controllers 118,130 communicate using the master/slave relationship, in which the master controller 130 initiates the data frame transmission of the data packet 120. When the master controller 130 generates a clock signal SCLK and selects via a slave select signal SS1, SS2, SS3, etc to a slave device, data can be transferred in either or both directions simultaneously. In the case of data in the data packets 120,121 representing parameters 122, the previously submitted parameters 122 that were used to activate the respective elements 116 are returned as a "used" data packet 121 from the display controller 118 to the system controller 130, while the next data packet 120 containing parameters 122 for use in activating the next number (one or more) elements 116 is transmitted to the display controller 118 from the system controller 130. In fact, as far as SPI is concerned, data packets 120,121 are transferred in both directions on the network 111 and it is up to the master and slave devices to know whether a received byte is meaningful or not. So respective a device must discard the received byte in a "transmit only" frame or generate a dummy byte for a "receive only" frame.

The slave select signal SS is used by the master controller 130 to indicate to a selected slave controller 118 that the master controller 130 wishes to start an SPI data exchange between that remote slave device and itself. The select signal SS can be set as active low, so a low on this line can indicate the SPI is active, while a high can signal inactivity. Further, the select signal SS can be used to improve noise immunity of the system 10, so as to help reduce cross talk and undesirable cross activation of the display units 112 out of sequence. The select signal SS in the present system 10 can function as a reset for the

SPI slave controller 118 so that it is ready to receive the next byte associated with the next display image IN.

Therefore in view of the above, it is recognised that the SPI communication protocol implemented by the controllers 130,118 is a Data Exchange protocol, whereby each device has two data lines, one for input and one for output, such that as data 120 is being clocked out new data is also being clocked in 121 (in the case of the master controller 130). Further, as data 121 is being clocked out new data is also being clocked in 120 (in the case of the slave controller 130). Therefore, when one controller "transmits" data, the incoming data is read before attempting to transmit again. If the incoming data is not read, then the data will be lost and the SPI controller can become disabled as a result. Therefore, in the present system 10, the controllers 118,130 are configured to read the data after a transfer has taken place, even if the data has no use by the respective controller. It is recognised that these data exchanges between the controllers 130,118 are controlled by the clock line, SCLK, which is set by the master device based on the reported vehicle speed V. Accordingly, the master controller 130 is configured (for example as part of a parameter generation module 134 to either increase or decrease the clock signal frequency based on changes in reported speed V, as determined by the speed sensor in real time.

It is recognized that operation of the speed sensor 26 in real time can be defined as multiple vehicle speed V readings are performed or otherwise identified by the speed sensor 26 within the time period for display of the all of the pixels P for all of the display images I of the plurality of display units 112. For example, a plurality of speeds V are reported in the time period (or time periods) measured between the start of activation of the first element 16 of the display image I for the first display unit 112 (of the plurality of display units 112) in the first individual column image component LN₁ and the start of activation of the last element 16 of the display image I in the last individual column image component LNₘ of the last display unit 112 (of the plurality of display units 112), or any other time interval there between. It is recognized that the reporting of the speeds V can be on a periodic basis (regular or irregular), as desired, such that each display image IN for each of the plurality of display units 112 is initiated based on a respective clock signal SCLK determined using a plurality of different vehicle speeds V, as further described below.

In implementation of this duplex communication for an indeterminate number of parameters 122 to be transmitted in the data packets 120, 121, the number of bytes transmitted in the packet 120 can be specified as a constant or specified/predefined number. For example, this number of bytes in the data packets 120,121 can be specified as the number of bytes needed to represent the parameters 122 for all of the elements 116 in a particular column image component LNₘ, or a specified subset thereof. For example, in the case where a speed V change is detected before generation of all of the parameters 122 for the elements 116 of one of the column image component LNₘ, null or dummy bytes can be inserted into the package 120 representing those parameters 122 not yet generated and thus would be dependent on the different speed V. Similarly, for those parameters 122 not used by the slave controller 118 in activation of the elements 116, null or dummy bytes can be inserted into the data package 121 representing those parameters 122 not used in the previous activation of the elements 116.

As such, use of different SPI clock signals SCLK for the different display units 112, such that each of the clock signals SCLK for two or more display units 112 is based on a different vehicle speed V, provides for synchronization of the plurality of display units 112, such that the data packets 120 can be transmitted and the clock control signals SCLK on the respective clock control lines can be used to synchronize the start/activation time of the display action of the elements 116 for each of the plurality of display units 112. In this manner, the respective start times for display of the display image IN on each of the plurality of display units 112 is synchronized in view of variable vehicle speed V. In the present system 10, the SPI communication interfaces of the communication modules 138,140 can specifies four signals: clock (SCLK); master data output, slave data input (MOSI); master data input, slave data output (MISO); and slave select (SS), such that SCLK is generated by the master and input to all slaves. MOSI carries data from master controller 130 to slave controller 118. MISO carries data from slave controller 118 back to master controller 130. A slave device is selected when the master controller 130 asserts its respective SS signal, such that the master controller 130 generates a separate slave select signal SS for each slave controller 118. It should be noted that that the master controller 130 initiates the frames of the data packets 120,121 for both the master controller's 130 command and the slave controller's 118 response. Therefore, synchronization can be realized between the different display units in an environment of changing vehicle speed V, as no data will be transferred over the network 111 between the controllers 118,130 unless the clock is manipulated. As such, all slave controllers 118 are controlled by the clock which is manipulated by the master controller 130 based on reported readings of the vehicle speed V by the speed sensor 126. Further, it is recognised that the slave controllers 118 can not manipulate the clock and the SSP configuration registers can control how a device will respond to the clock input.

A pair of parameters called clock polarity (CPOL) and clock phase (CPHA) determine the edges of the clock signal SCLK on which the data of the data packets 120,121 are driven and sampled. Each of the two parameters CPOL and CPHA has two possible states, which allows for four possible combinations, all of which are incompatible with one another. So a master/slave pair use the same parameter pair values to communicate. If multiple slaves are used that are fixed in different configurations, the master controller 130 to reconfigures itself each time it needs to communicate with a different slave controller 118. As such, it is advantageous in use of the SPI master/slave configuration for the remote controllers 130,118 SPI in which the devices transfer the data packets 120,121 as data streams over the network 111.

### Example controller configuration

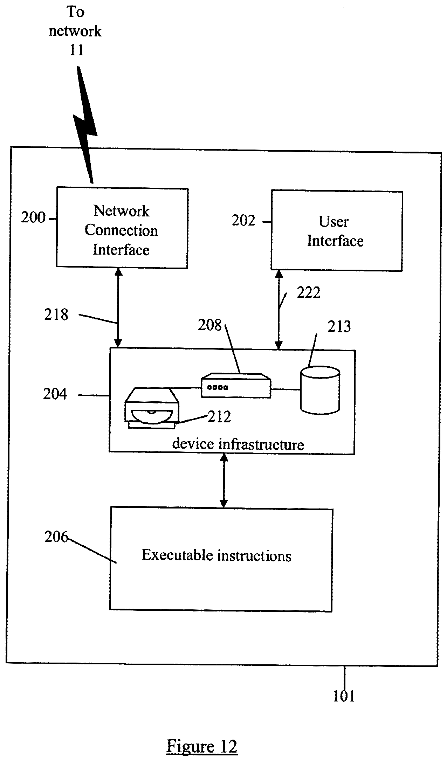

Referring to Figures 1 and 12, each of the above-described devices 12,18, 26, 27, 30,78 can be implemented on one or more respective computing device(s) 101. The devices 101 in general can include a network connection interface 200, such as a network interface card or a modem, coupled via connection 218 to a device infrastructure 204. The connection interface 200 is connectable during operation of the devices 101 to the network 11 (e.g. an wired and/or wireless intranet and/or an extranet such as the Internet), which enables the devices 101 to communicate with each other as appropriate. The network 11 supports the communication 14 of the data parameters 22 and data 80 between the controllers18,30, between the controllers 18 and the respective display units 12 and between the network controller 78 and one or more system controllers 30 that oversee one or more series 9 of display units 12. Also contemplated is the communication of vehicle location and speed data over the network 11.

Referring again to Figure 12, the devices 101 can also have a user interface 202, coupled to the device infrastructure 204 by connection 222, to interact with a user (e.g. technician). The user interface 202 can include one or more user input devices such as but not limited to a QWERTY keyboard, a keypad, a track wheel, a stylus, a mouse, a microphone and the user output device such as an LCD screen display and/or a speaker. If the screen is touch sensitive, then the display can also be used as the user input device as controlled by the device infrastructure 204.

Referring again to Figure 12, operation of the device 101 is facilitated by the device infrastructure 204. The device infrastructure 204 includes one or more computer processors 208 and can include an associated physical memory 213 (e.g. 32,36) (e.g. a random access memory) for storing of data parameters 22 (both speed dependent and speed independent factors), speed and location data, demographic data and for processing communications communicated between the devices 101. The computer processor 208 facilitates performance of the device 101 configured for the intended functionality (e.g. of the controllers 18,30, 78, display units 12 and sensors 26,27) through operation of the network interface 200, the user interface 202 and other application programs/hardware 206 of the device 101 by executing related instructions. These related instructions can be provided by an operating system, and/or software applications 206 located in the memory, and/or by operability that is configured into the electronic/digital circuitry of the processor(s) 208 designed to perform the specific task(s) of the controllers 18,30, 78, display units 12 and sensors 26,27. Further, it is recognized that the device infrastructure 204 can include a computer readable storage medium 212 coupled to the processor 208 for providing instructions to the processor 208 and/or to load/update client applications 206. The computer readable medium 212 can include hardware and/or software such as, by way of example only, magnetic disks, magnetic tape, optically readable medium such as CD/DVD ROMS, and memory cards. In each case, the computer readable medium 212 may take the form of a small disk, floppy diskette, cassette, hard disk drive, solid state memory card, or RAM provided in the memory. It should be noted that the above listed example computer readable mediums 212 can be used either alone or in combination.

Further, it is recognized that the computing devices 101 can include the executable applications 206 comprising code or machine readable instructions for implementing predetermined functions/operations including those of an operating system, for example, in response to user command or input. The processor 208 as used herein is a configured device and/or set of machine-readable instructions for performing operations as described by example above. As used herein, the processor 208 may comprise any one or combination of, hardware, firmware, and/or software. The processor 208 acts upon information by manipulating, analyzing, modifying, converting or transmitting information for use by an executable procedure or an information device, and/or by routing the information with respect to an output device. The processor 208 may use or comprise the capabilities of a controller or microprocessor, for example. Accordingly, any of the functionality (e.g. any of of the controllers 18,30, 78, display units 12 and sensors 26,27) provided by the systems and process of the FIGS may be implemented in hardware, software or a combination of both. Accordingly, the use of a processor 208 as a device and/or as a set of machine readable instructions is hereafter referred to generically as a processor/module for sake of simplicity.

It will be understood that the computing devices 101 may be, for example, programmable logic controllers or other network configured devices (e.g. having SPI configuration). Server computing devices 101 (e.g. for the network controller78) may additionally include a secondary storage element such as the memory (e.g. database). Each server, although depicted as a single computer system, may be implemented as a network of computer processors, as desired.

## Claims

1. A system for generating a display image having multiple image display columns comprising a first image display column and a second image column for viewing by a viewer in motion in a variable vehicle speed environment, the system comprising:
a display unit having a vertical column of energizable light elements, each row of the column having at least one energizable light element, the display unit being configured for being positioned adjacent to a pathway used by a moving vehicle; and
a controller configured for:
• receiving a variable speed of the vehicle, including a first speed and a second speed;
• generating first display parameters based on the first of the vehicle speed for at least one row element in the first image display column of the multiple image display columns;
• receiving a second vehicle speed different from the first vehicle speed;
• generating second display parameters based on the second vehicle speed for at least one row element in the second image display column of the multiple image display columns; and
• transmitting the first and second display parameters to the display unit;
wherein the display unit is configured for generating the display image based on the first and second display parameters such that the first image display column and the second image display column of the display image are both to be generated sequentially from the same column of energizable light elements,
wherein the first image display column and the second image display column are configured to be aggregated by the human visual system to build a single display image;
where the display parameters include any of what time to start to energize/activate the energizing elements, what duration to energize/activate the energizing elements, variability of colour and brightness to display the image, activation frequency and/or frame rate.

2. The system of claim 1, wherein the display unit is one of a plurality of display units in a series of display units.

3. The system of claim 2, wherein each of the display units displays a display image that is part of a composite panoramic display image.

4. The system of claim 3, further comprising the controller configured to control spacings between the adjacent display images in the panoramic display image.

5. The system of claim 3, wherein the controller is configured to modify a brightness level of adjacent or overlapping image display columns in adjacent display images of the panoramic display image.

6. The system of claim 1, wherein the controller is configured to modify a brightness level of adjacent image display columns in the display image in order to correlate a brightness level of respective row elements in each of the adjacent image display columns.

7. The system of claim 6, wherein the brightness level is modified in order to generate blank spaces by having no image being created for one or more adjacent initial and final image display columns.

8. The system of claim 1, wherein the controller is configured to use the periodic occurrence of predefined structures of the vehicle to determine changes in the vehicle speed.

9. The system of claim 8, wherein the predefined structure is a gap between adjacent cars of a train.

10. The system of claim 1, further comprising the controller configured to identify one or more inhibited display zones for the display image, such that the row elements of the display unit are inhibited from activation by delaying or otherwise restricting operation of the display unit when the one or more inhibited display zones is within line of sight of the display unit.

11. The system of claim 1, further comprising a network controller at a remote site from the controller, the network controller configured to provide centralized loading, unloading, and scheduling of image data to the controller communicated over a communications network.

12. The system of claim 10, wherein the image data is streamed as display image content in real or near real-time from the network controller to the controller.

13. The system of claim 2, further comprising:
a plurality of location detection units for detecting a location of the moving vehicle on the pathway,
wherein each of the display units has a respective display controller associated therewith and said controller is a system controller in communication with the display controllers,
wherein each of the display controllers has a speed sensor configured for sensing the vehicle speed relative to the display unit;
wherein the speed sensor is positioned between the location detection units so that the speed of the moving vehicle is detected when the location of the moving vehicle is detected by the location detection unit.

14. The system of claim 2, further comprising:
a plurality of laser beam sensors configured to be disposed at regular intervals along the pathway of the moving vehicle so that both location and speed of the moving vehicle on the pathway are detected at the same time,
wherein each of the display units has a respective display controller associated therewith and said controller is a system controller in communication with the display controllers,
wherein each of the display controllers has a speed sensor configured for sensing the vehicle speed relative to the display unit.

15. A system for generating a plurality of display images each having multiple image display columns, said each having multiple image display columns for viewing by a viewer in motion in a variable vehicle speed environment, the system comprising: a plurality of display units as in claim 1 in a series of display units,
said each of the display units having a respective display controller associated therewith; and
a system controller in communication with the display controllers and configured for:
generating display parameters as in claim 1 for the row elements in the multiple image display columns of each of the plurality of display images and transmitting the display parameters to each of the display controllers configured for generating the display images as in the display unit of claim 1, such that communication between the display controllers and system controllers is over a communications network and the communications are synchronized using a Serial Peripheral Interface, SPI, the display controllers being in a physical location remote from the physical location of the system controller;
wherein the multiple image display columns are configured to be aggregated by the human visual system to build respective single display images of the plurality of display images.

## Patentansprüche

1. System zum Erzeugen eines Anzeigebilds, das mehrere Anzeigespalten aufweist, die eine erste Bildanzeigespalte und eine zweite Bildspalte aufweisen, um durch einen bewegten Betrachter in einer Fahrzeugumgebung mit variabler Geschwindigkeit betrachtet zu werden, das System aufweisend:
eine Anzeigeeinheit, die eine vertikale Spalte von in erregbaren Lichtelementen aufweist, wobei jede Zeile der Spalte mindestens ein erregbares Lichtelement aufweist, die wobei Anzeigeeinheit konfiguriert ist, zu einem Pfad benachbart platziert zu werden, den durch ein sich bewegendes Fahrzeug nimmt; und
einen Controller, konfiguriert zum:
• Empfangen einer variablen Geschwindigkeit des Fahrzeugs, aufweisend eine erste Geschwindigkeit und eine zweite Geschwindigkeit;
• Erzeugen erster Anzeigeparameter auf Grundlage der ersten der Fahrzeuggeschwindigkeiten für mindestens ein Zeilenelement der ersten Bildanzeigespalte der mehreren Bildanzeigespalten;
• Empfangen einer zweiten Fahrzeuggeschwindigkeit, die sich von der ersten Fahrzeuggeschwindigkeit unterscheidet;
• Erzeugen zweiter Anzeigeparameter auf Grundlage der zweiten Fahrzeuggeschwindigkeit für mindestens ein Zeilenelement der zweiten Bildanzeigespalte der mehreren Bildanzeigespalten; und
• Übertragen des ersten und des zweiten Anzeigeparameters an die Anzeigeeinheit;
wobei die Anzeigeeinheit konfiguriert ist, das Anzeigebild auf Grundlage des ersten und des zweiten Anzeigeparameters so zu erzeugen, dass die erste Bildanzeigespalte und die zweite Bildanzeigespalte des Anzeigebilds beide nacheinander aus derselben Spalte erregbarer Lichtelemente erzeugt werden sollen,
wobei die erste Bildanzeigespalte und die zweite Bildanzeigespalte konfiguriert sind, durch das menschliche visuelle System aggregiert zu werden, um ein einziges Anzeigebild aufzubauen;
wobei die Anzeigeparameter eines aus der Zeit, zu der das Erregen/Aktivieren der erregenden Elemente beginnen soll, der Dauer des Erregens/Aktivierens der erregenden Elemente, der Variabilität der Farbe und Helligkeit zum Anzeigen des Bilds, der Aktivierungsfrequenz und/oder der Bildwiederholrate aufweisen.

2. System nach Anspruch 1, wobei die Anzeigeeinheit eine aus mehreren Anzeigeeinheiten in einer Reihe von Anzeigeeinheiten ist.

3. System nach Anspruch 2, wobei jede der Anzeigeeinheiten ein Anzeigebild anzeigt, das ein Abschnitt eines zusammengesetzten Panoramaanzeigebilds ist.

4. System nach Anspruch 3, ferner umfassend den Controller, konfiguriert, Abstände zwischen benachbarten Anzeigebilden in dem Panoramaanzeigebild zu steuern.

5. System nach Anspruch 3, wobei der Controller konfiguriert ist, eine Helligkeitsstufe benachbarter oder überlappender Bildanzeigespalten in benachbarten Anzeigebildern des Panoramaanzeigebilds zu modifizieren.

6. System nach Anspruch 1, wobei der Controller konfiguriert ist, eine Helligkeitsstufe benachbarter Bildanzeigespalten in dem Anzeigebild zu modifizieren, um eine Helligkeitsstufe jeweiliger Zeilenelemente in jeder der benachbarten Anzeigespalten zu korrelieren.

7. System nach Anspruch 6, wobei die Helligkeitsstufe modifiziert wird, um leere Räume zu erzeugen, indem für eine oder mehrere benachbarte anfängliche und abschließende Bildanzeigespalten kein Bild erzeugt wird.

8. System nach Anspruch 1, wobei der Controller konfiguriert ist, das periodische Auftreten vorgegebener Strukturen des Fahrzeugs zu verwenden, um Änderungen an der Fahrzeuggeschwindigkeit zu bestimmen.

9. System nach Anspruch 8, wobei die vorgegebene Struktur eine Lücke zwischen benachbarten Waggons eines Zugs ist.

10. System nach Anspruch 1, ferner umfassend den Controller, konfiguriert, eine oder mehrere beschränkte Anzeigezonen für das Anzeigebild zu identifizieren, sodass die Zeilenelemente der Anzeigeeinheit an der Aktivierung gehindert werden, indem der Betrieb der Anzeigeeinheit verzögert oder anderweitig eingeschränkt wird, wenn sich die eine oder die mehreren beschränkten Anzeigezonen im Sichtbereich der Anzeigeeinheit befinden.

11. System nach Anspruch 1, ferner umfassend einen Netzwerkcontroller an einem vom Controller entfernten Ort, der Netzwerkcontroller konfiguriert, zentralisiertes Laden, Entladen und Planen von Bilddaten an den Controller bereitzustellen, die über ein Kommunikationsnetzwerk kommuniziert werden.

12. System nach Anspruch 10, wobei die Bilddaten als Anzeigebildinhalt in Echtzeit oder annähernd Echtzeit von dem Netzwerkcontroller zum Controller gestreamt werden.

13. System nach Anspruch 2, ferner umfassend:
mehrere Ortserkennungseinheiten zum Erkennen eines Orts des sich bewegenden Fahrzeugs auf dem Pfad,
wobei jede der Anzeigeeinheiten einen jeweiligen Anzeigecontroller aufweist, der mit ihr assoziiert ist, wobei der Controller ein Systemcontroller in Kommunikation mit den Anzeigecontrollern ist,
wobei jeder der Anzeigecontroller einen Geschwindigkeitssensor aufweist, der konfiguriert ist, die Fahrzeuggeschwindigkeit relativ zur Anzeigeeinheit zu erkennen;
wobei der Geschwindigkeitssensor zwischen den Ortserkennungseinheiten platziert ist, sodass die Geschwindigkeit des sich bewegenden Fahrzeugs erkannt wird, wenn der Ort des sich bewegenden Fahrzeugs durch eine Ortserkennungseinheit erkannt wird.

14. System nach Anspruch 2, ferner umfassend:
mehrere Laserstrahlsensoren, konfiguriert, in regelmäßigen Abständen entlang des Pfads des sich bewegenden Fahrzeugs platziert zu sein, sodass Ort und Geschwindigkeit des sich bewegenden Fahrzeugs auf dem Pfad gleichzeitig erkannt werden,
wobei jede der Anzeigeeinheiten einen jeweiligen Anzeigecontroller aufweist, der mit ihr assoziiert ist, wobei der Controller ein Systemcontroller in Kommunikation mit den Anzeigecontrollern ist,
wobei jeder der Anzeigecontroller einen Geschwindigkeitssensor aufweist, der konfiguriert ist, die Fahrzeuggeschwindigkeit relativ zur Anzeigeeinheit zu erkennen.

15. System zum Erzeugen mehrerer Anzeigebilder, die jeweils mehrere Bildanzeigespalten aufweisen, wobei das jeweilige Aufweisen mehrerer Bildanzeigespalten zum Betrachten durch einen Betrachter in Bewegung in einer Fahrzeugumgebung mit variabler Geschwindigkeit dienen, das System umfassend: mehrere Anzeigeeinheiten nach Anspruch 1 in einer Reihe von Anzeigeeinheiten,
wobei jede der Anzeigeeinheiten einen jeweiligen Anzeigecontroller aufweist, der mit ihr assoziiert ist; und
einen Systemcontroller in Kommunikation mit den Anzeigecontrollern und konfiguriert zum:
Erzeugen von Anzeigeparametern nach Anspruch 1 für die Zeilenelemente in den mehreren Bildanzeigespalten jedes der mehreren Anzeigebilder und Übertragen der Anzeigeparameter an jeden der Anzeigecontroller, die konfiguriert sind, die Anzeigebilder wie in der Anzeigeeinheit nach Anspruch 1 zu erzeugen, sodass die Kommunikation zwischen den Anzeigecontrollern und Systemcontrollern über ein Kommunikationsnetzwerk erfolgt und die Kommunikationsvorgänge unter Verwendung einer seriellen peripheren Schnittstelle, SPI, synchronisiert sind, wobei sich die Anzeigecontroller an einem physischen Ort befinden, der von dem physischen Ort des Systemcontrollers entfernt ist;
wobei die mehreren Bildanzeigespalte konfiguriert sind, durch des menschliche visuelle System aggregiert zu werden, um jeweils einzelne Anzeigebilder der mehreren Anzeigebilder aufzubauen.

## Revendications

1. Système pour générer une image d'affichage présentant de multiples colonnes d'affichage d'image comprenant une première colonne d'affichage d'image et une seconde colonne d'image pour observation par un observateur en mouvement dans un environnement à vitesse de véhicule variable, le système comprenant :
une unité d'affichage présentant une colonne verticale d'éléments lumineux pouvant être excités, chaque rangée de la colonne présentant au moins un élément lumineux pouvant être excité, l'unité d'affichage étant configurée pour être positionnée adjacente à un passage utilisé par un véhicule en mouvement ; et
un dispositif de commande configuré pour :
• recevoir une vitesse variable du véhicule, comprenant une première vitesse et une seconde vitesse ;
• générer des premiers paramètres d'affichage sur la base de la première vitesse de véhicule pour au moins un élément de rangée dans la première colonne d'affichage d'image des multiples colonnes d'affichage d'image ;
• recevoir une seconde vitesse de véhicule différente de la première vitesse de véhicule ;
• générer des seconds paramètres d'affichage sur la base de la seconde vitesse de véhicule, pour au moins un élément de rangée dans la seconde colonne d'affichage d'image des multiples colonnes d'affichage d'image ; et
• transmettre les premiers et seconds paramètres d'affichage à l'unité d'affichage ;
dans lequel l'unité d'affichage est configurée pour générer l'image d'affichage sur la base des premiers et seconds paramètres d'affichage de telle sorte que la première colonne d'affichage d'image et la seconde colonne d'affichage d'image de l'image d'affichage sont toutes les deux prévues pour être générées séquentiellement à partir de la même colonne d'éléments lumineux pouvant être excités,
dans lequel la première colonne d'affichage d'image et la seconde colonne d'affichage d'image sont configurées pour être regroupées par le système visuel humain pour construire une image d'affichage unique ;
où les paramètres d'affichage incluent un paramètre quelconque parmi une heure à laquelle démarrer l'excitation/l'activation des éléments d'excitation, une durée d'excitation/d'activation des éléments d'excitation, une variabilité de couleur et de luminosité pour afficher l'image, une fréquence d'activation et/ou une cadence de trames.

2. Système selon la revendication 1, dans lequel l'unité d'affichage est l'une d'une pluralité d'unités d'affichage d'une série d'unités d'affichage.

3. Système selon la revendication 2, dans lequel chacune des unités d'affichage affiche une image d'affichage qui fait partie d'une image d'affichage panoramique composite.

4. Système selon la revendication 3, comprenant en outre le dispositif de commande configuré pour commander des espacements entre les images d'affichage adjacentes dans l'image d'affichage panoramique.

5. Système selon la revendication 3, dans lequel le dispositif de commande est configuré pour modifier un niveau de luminosité de colonnes d'affichage d'image adjacentes ou se chevauchant dans des images d'affichage adjacentes de l'image d'affichage panoramique.

6. Système selon la revendication 1, dans lequel le dispositif de commande est configuré pour modifier un niveau de luminosité de colonnes d'affichage d'image adjacentes dans l'image d'affichage afin de corréler un niveau de luminosité d'éléments de rangée respectifs dans chacune des colonnes d'affichage d'image adjacentes.

7. Système selon la revendication 6, dans lequel le niveau de luminosité est modifié afin de générer des espaces vierges en n'ayant aucune image créée pour une ou plusieurs colonnes d'affichage d'image initiales et finales adjacentes.

8. Système selon la revendication 1, dans lequel le dispositif de commande est configuré pour utiliser l'apparition périodique de structures prédéfinies du véhicule afin de déterminer des changements de la vitesse de véhicule.

9. Système selon la revendication 8, dans lequel la structure prédéfinie est un dégagement entre des wagons adjacents d'un train.

10. Système selon la revendication 1, comprenant en outre le dispositif de commande configuré pour identifier une ou plusieurs zones d'affichage inhibées pour l'image d'affichage, de telle sorte que l'activation des éléments de rangée de l'unité d'affichage est empêchée par retardement ou une autre opération de limitation de l'unité d'affichage lorsque les une ou plusieurs zones d'affichage inhibées se trouvent dans la ligne de mire de l'unité d'affichage.

11. Système selon la revendication 1, comprenant en outre un dispositif de commande de réseau au niveau d'un site éloigné par rapport au dispositif de commande, le dispositif de commande de réseau étant configuré pour permettre le chargement, le déchargement et la planification centralisés de données d'image sur le dispositif de commande communiquant par un réseau de communication.

12. Système selon la revendication 10, dans lequel les données d'image sont diffusées en continu en tant que contenu d'image d'affichage en temps réel ou presque en temps réel depuis le dispositif de commande de réseau vers le dispositif de commande.

13. Système selon la revendication 2, comprenant en outre :
une pluralité d'unités de détection d'emplacement pour détecter un emplacement du véhicule en mouvement sur le passage,
dans lequel chacune des unités d'affichage présente un dispositif de commande d'affichage respectif qui lui est associé et ledit dispositif de commande est un dispositif de commande de système en communication avec les dispositifs de commande d'affichage,
dans lequel chacun des dispositifs de commande d'affichage comporte un capteur de vitesse configuré pour détecter la vitesse de véhicule par rapport à l'unité d'affichage ;
dans lequel le capteur de vitesse est positionné entre les unités de détection d'emplacement de telle sorte que la vitesse du véhicule en mouvement est détectée lorsque l'emplacement du véhicule en mouvement est détecté par l'unité de détection d'emplacement.

14. Système selon la revendication 2, comprenant en outre :
une pluralité de capteurs à faisceau laser configurés pour être disposés à intervalles réguliers le long du passage du véhicule mobile de telle sorte que l'emplacement et la vitesse du véhicule mobile sur le passage sont tous les deux détectés en même temps,
dans lequel chacune des unités d'affichage comporte un dispositif de commande d'affichage respectif qui lui est associé et ledit dispositif de commande est un dispositif de commande de système en communication avec les dispositifs de commande d'affichage,
dans lequel chacun des dispositifs de commande d'affichage comporte un capteur de vitesse configuré pour détecter la vitesse de véhicule par rapport à l'unité d'affichage.

15. Système pour générer une pluralité d'images d'affichage présentant chacune de multiples colonnes d'affichage d'image, chacune desdites images d'affichage ayant de multiples colonnes d'affichage d'image pour observation par un observateur en mouvement dans un environnement à vitesse de véhicule variable, le système comprenant : une pluralité d'unités d'affichage conformes à la revendication 1 d'une série d'unités d'affichage,
chacune desdites unités d'affichage présentant un dispositif de commande d'affichage respectif qui lui est associé ; et
un dispositif de commande de système en communication avec les dispositifs de commande d'affichage et configuré pour :
générer des paramètres d'affichage conformément à la revendication 1 pour les éléments de rangée dans les multiples colonnes d'affichage d'image de chacune de la pluralité d'images d'affichage et transmettre les paramètres d'affichage à chacun des dispositifs de commande d'affichage configurés pour générer les images d'affichage comme dans l'unité d'affichage de la revendication 1, de telle sorte que la communication entre les dispositifs de commande d'affichage et les dispositifs de commande de système se fait par un réseau de communication et les communications sont synchronisées à l'aide d'une interface périphérique série, SPI, les dispositifs de commande d'affichage étant dans un emplacement physique éloigné de l'emplacement physique du dispositif de commande de système ;
dans lequel les multiples colonnes d'affichage d'image sont configurées pour être regroupées par le système visuel humain pour construire des images d'affichage uniques respectives de la pluralité d'images d'affichage.
